# EUROPEAN PATENT APPLICATION

(11) **EP 3 483 488 A1**
(43) Date of publication of application: **15.05.2019**
(21) Application number: 17461631.8
(22) Date of filing: 13.11.2017
(51) Int. Cl.: F16K 15/03, F16K 27/00, F16K 27/02

(54) **CHECK VALVE HOUSING**

(71) Applicant: Hamilton Sundstrand Corporation, Charlotte, NC 28217 (US)
(72) Inventor: RESZEWICZ, Modest, 50-238 Wroclaw (PL); CZARNECKI, Pawel, 58-100 Swidnica (PL)
(74) Representative: Dehns

(57) **Abstract**

The present disclosure relates to an additively manufactured check valve housing (40) comprising an outer shell (42), having an outer wall surface defining an outer perimeter of the housing (40), and a lattice structure (44) within the outer shell (42).

## Description

### TECHNICAL FIELD

This disclosure relates to a check valve housing and also a method of manufacturing a check valve housing.

### BACKGROUND

It is known to use check valves to allow fluid flow in one direction therethrough, and to prevent flow in the opposite direction. Check valves are widely used in a wide variety of applications, for example in air conditioning systems, for example in aircraft air conditioning systems.

Check valves commonly include a pair of hinged flapper elements that pivot open in the direction of fluid flow when the fluid pressure differential exceeds a predetermined valve "cracking pressure". If a negative pressure differential exists across the valve, the flapper elements close, preventing flow reversal. Such check valves typically include a pair of flapper elements covering valve openings.

The housing of the check valve, including the openings and other features, is traditionally manufactured using a casting process, or using a subtractive manufacturing process, such as machining the housing from a solid block of material. These manufacturing processes are time consuming and expensive.

Moreover, check valve housings produced by existing methods may be relatively heavy. In many applications, particularly for aerospace applications, providing lower weight check valve housings (and thus, check valves) is highly desirable. However, the check valve housing must still be able to cope with the various stress and fatigue properties needed to permit its operation under various conditions and in certain environments.

### SUMMARY

From one aspect, the present disclosure relates to a check valve housing. The check valve housing comprises an outer shell having an outer wall surface defining an outer perimeter of the housing, and a lattice structure within the outer shell.

In an embodiment of the check valve housing, the housing is a generally planar, annular element. An outer perimeter of the housing defines an annular body, a web extending across the diameter of the annular body, and a pair of D-shaped openings formed between the annular body and the web.

In a further embodiment of any of the above check valve housings, the outer shell includes an inner wall surface, defining an inner perimeter of the outer shell, and the lattice structure extends between different portions of the inner wall surface.

In a further embodiment of any of the above check valve housings, at least one mounting opening for receiving attachment fasteners is defined through the housing by the outer wall surface of the outer shell.

From another aspect, the present disclosure relates to a method of manufacturing a check valve housing using additive manufacturing. The additive manufacturing comprises wire-feed metal deposition.

In an embodiment of the method, the method further comprises the step of depositing successive layers of material one on top of each other to provide an outer shell and a lattice structure within the outer shell.

In a further embodiment of the above method, the outer shell includes an inner wall surface, defining an inner perimeter of the outer shell. The method also further comprises the step of depositing the lattice structure to extend between different portions of the inner wall surface. In addition, in certain embodiments, the outer shell may have an outer wall surface defining an outer perimeter of the housing. The method may also further comprise the step of depositing successive layers such that the outer perimeter of the housing defines an annular body, a web extending across the diameter of the annular body, and a pair of D-shaped openings formed between the annular body and the web. In a further embodiment, at least one mounting opening may be defined through the housing.

In a further embodiment of any of the above check valve housings or the above method, the outer shell is a solid outer shell layer.

In a further embodiment of any of the above check valve housings or the above method, the lattice structure has an irregular structure, defining a mixed density within the outer shell. In an additional embodiment, the density of the lattice structure may be greater in an area of the housing determined to experience a relatively higher stress during operation, than in another area of the housing. Additionally or alternatively, the density of the lattice structure may be greater in an area of the housing determined to be relatively more susceptible to stress concentrations and/or fatigue than in another area of the housing.

In a further embodiment of any of the above check valve housings or the above method, the lattice structure has an irregular structure, comprising more than one different types of lattice structure within the outer shell.

In an alternative embodiment to the above, the lattice structure has a regular structure, defining an approximately uniform density within the outer shell and one type of lattice structure.

In a further embodiment of any of the above check valve housings or the above method, the thickness of the outer shell varies around the perimeter of the housing.

### BRIEF DESCRIPTION OF DRAWINGS

Some exemplary embodiments of the present disclosure will now be described by way of example only, and with reference to the following drawings in which:
Figure 1 shows a side view of a prior art check valve, in an open configuration;
Figure 2 shows a rear view of the check valve of Figure 1;
Figure 3 shows a plan view of the check valve of Figures 1 and 2;
Figure 4 shows a perspective view of the check valve of Figures 1 to 3 with one flapper element removed for clarity purposes;
Figure 5 shows a cross-sectional view through line A-A of a check valve housing, in accordance with embodiments of the present disclosure.
Figure 6 shows a cross-sectional view through line B-B of a check valve housing, in accordance with embodiments of the present disclosure.
Figure 7 shows a semi-transparent perspective view of a check valve housing, in accordance with embodiments of the present disclosure.

### DETAILED DESCRIPTION

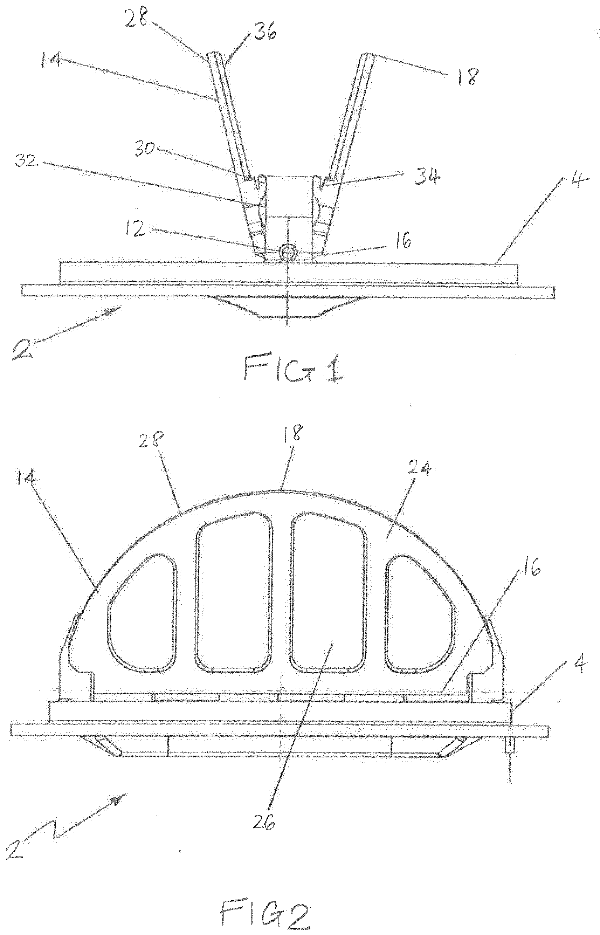

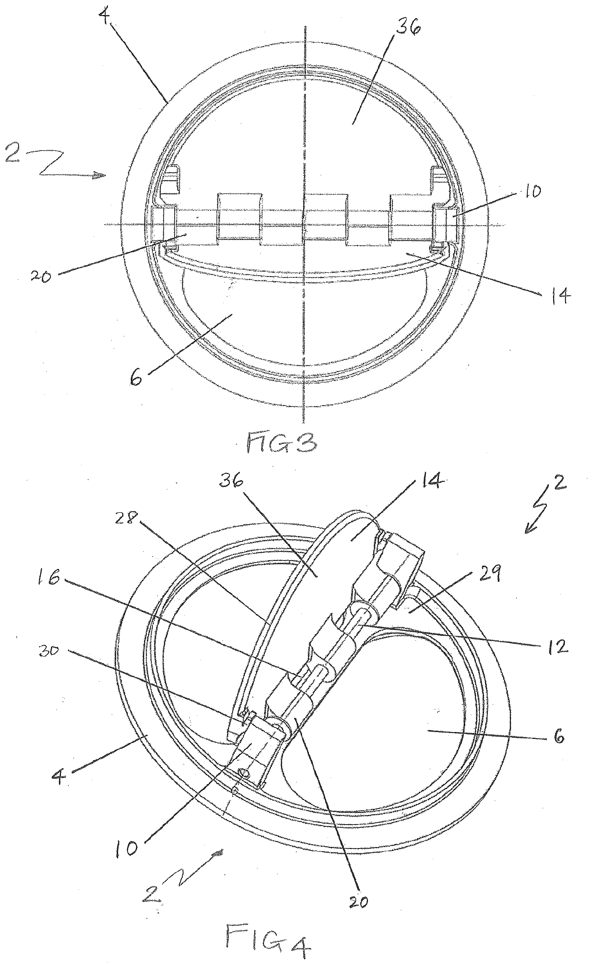

With reference to Figures 1 to 4, a prior art check valve 2 (as disclosed in EP 3 220 024 A1) is illustrated. The check valve 2 is configured to be mounted around its periphery in or to, for example, a duct in order to prevent reverse flow of a fluid through the duct.

The check valve 2 comprises a valve housing 4 formed as a generally planar annular element. The valve housing 4 comprises a pair of valve openings 6 which are separated by a central web 8 of the valve housing 4.

A pair of mounting posts 10 are arranged on opposed sides of the valve housing 4 and extend upwardly from the valve housing 4. As shown, the mounting posts 10 are formed integrally with the valve housing 4. In other arrangements, however, they may be formed separately and mounted to the housing 10 using fasteners extending through a peripheral region of the valve housing 4.

A hinge pin 12 is mounted between the mounting posts 10 above the central web 8 of the valve housing 4.

The valve openings 6 are closed by a pair of generally planar D-shaped flapper elements 14 which are pivotally mounted to the hinge pin 12. Each flapper element 14 includes a proximal end 16 and a distal end 18 and includes one or more mounting lugs 20, positioned at its proximal end 16. The mounting lugs 20 have respective bores 22 through which the hinge pin 12 extends. The mounting lugs 20 of the respective flapper elements 14 alternate along the hinge pin 12.

As shown in Figure 2, the lower surfaces 24 of the flapper elements 14 are provided with a plurality of recesses 26, for weight saving purposes.

The flapper elements 14 are configured to move between an open position and a closed position, permitting or preventing flow through the openings 6 respectively. The peripheral region 28 of the lower surface of each flapper element 14 engages the flange 29 surrounding the respective valve housing opening 6 when the valve 2 is in the closed position, forming a seal therebetween.

Each flapper element 14 further comprises at pair of bumper elements 30 at its proximal end. Two bumper elements 30 are arranged at opposite sides of the flapper element 14. The bumper elements 30 are configured to engage respective stop surfaces 32 formed on the respective mounting posts 10 when the flapper elements 14 are in the open position to prevent the flapper elements 14 from opening beyond a maximum opening angle. The maximum opening angle may be determined based upon the valve design or flow requirements, for example.

The stop surface 32 is a vertical planar surface of the mounting post 10.

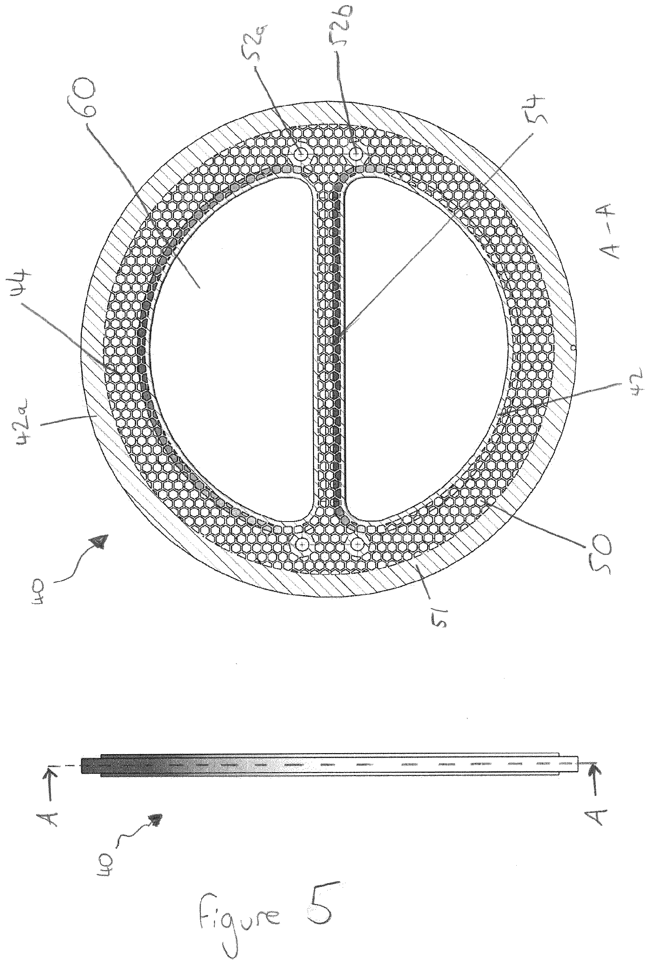

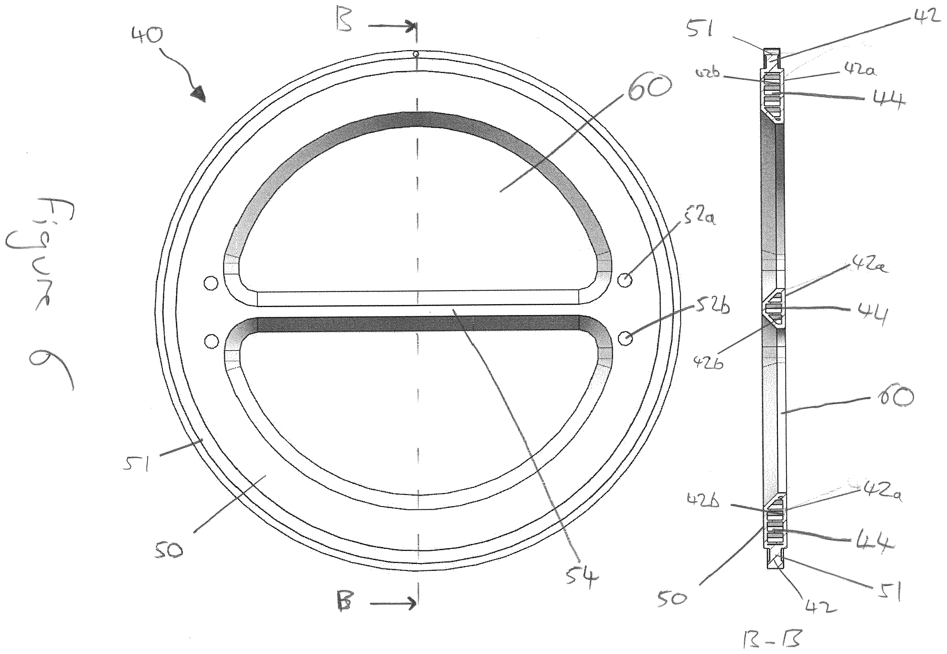

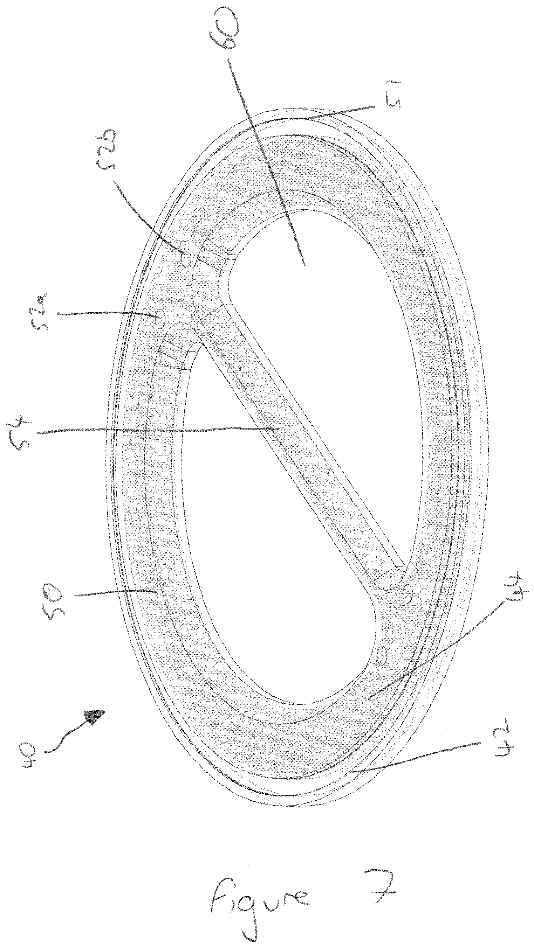

Figures 5 to 7 show a check valve housing 40 in accordance with embodiments of this disclosure. Check valve housing 40 is suitable for a check valve, such as check valve 2 described above.

Check valve housing 40 is formed as a generally planar, annular element. The housing 40 comprises an outer shell 42 having an outer wall surface 42a defining an outer perimeter of the housing 40 and an inner wall surface 42b defining an inner perimeter of the outer shell 42, and enclosing an interior volume of the housing 40. A lattice structure 44 is disposed within the outer shell 42 and extends to fill the inner perimeter defined by the inner wall surface 42b. In this manner, the outer shell 42 forms an external layer of material that surrounds the lattice structure 44. In certain embodiments, the outer shell 42 may hermetically seal the interior volume defined thereby from the exterior of the housing 40.

The outer wall surface 42a defines an annular body 50 with an outer rim 51, a web 54 extending across the diameter of the annular body 50, and a pair of D-shaped openings 60 formed between the annular body 50 and the web 54. Two pairs of mounting openings 52a, 52b are also defined through the annular body 50 of the housing by the outer wall surface 42a of the outer shell 42. The D-shaped openings 60 may be suitable for supporting and being covered by planar D-shaped flapper elements during check valve operation, the web 54 may be suitable for supporting the hinge pin and flapper elements, and the mounting openings 52a, 52b may be suitable for allowing attachment of mounting posts (securing the hinge pin) to the flapper housing 40 by suitable fasteners. The outer rim 51 is an optional feature of the housing 40, which can be included in certain embodiments to provide a sealing lip or edge that interfaces with a duct to provide improved sealing between the duct and the check valve. In the depicted embodiments, the outer rim 51 is composed entirely of the outer shell 42 material, and does not include a lattice structure.

The check valve housing structures allow check valve function, such as discussed above in relation to Figures 1 to 4. However, it is to be understood, that within the scope of this disclosure, any appropriate arrangement of check valve housing structures could be formed as part of the check valve housing, depending on the check valve design. As will be understood by the skilled person, the precise arrangement will be different depending on the purpose, positioning and control mechanism of the eventual check valve. For instance, instead of a pair of D-shaped openings 60, there may be a single opening or additional openings, and the opening(s) may be any suitable shape. In certain embodiments, the mounting openings 52a, 52b may be omitted. In other embodiments, the mounting openings 52a, 52b may be replaced by mounting posts that are integrally formed with the check valve housing 40, such as depicted in Figures 1 to 4.

The lattice structure 44 can be any suitable lattice structure. The lattice structure may comprise a series of nodes interconnected by ligaments, defining a porous construction. The interior volume enclosed by the outer shell 42 where no nodes or ligaments are present is hollow (i.e. void of solid material). In certain embodiments, the volume defined within the outer shell not occupied by the lattice structure 44 may be empty or filled with a gas. In certain embodiments, the lattice structure 44 may be any Bravais lattice structure, such as cubic, triclinic, monoclinic, orthorhombic, tetragonal, hexagonal or rhombohedral. In the specific illustrated embodiment, the lattice structure has a honeycomb structure. The lattice structure may be regular or irregular. By regular, it is meant that the lattice structure has an approximately uniform density between the inner wall surface 42b and is one type of lattice structure. By irregular, it is meant that the lattice structure 44 has a mixed density between the inner wall surface 42b, and/or may comprise one or more types of lattice structure. The relative density of the lattice structure can be varied by making the unit cell of the lattice structure smaller or larger. For instance, an area of lattice structure 44 with a smaller (tighter spaced) unit cell will provide a denser lattice structure per unit volume than area of lattice structure 44 with a larger (more spaced apart) unit cell.

As will be appreciated by the skilled person, the lattice structure type and density can be varied according to stress and fatigue requirements in certain areas of the check valve housing. In areas where the check valve housing is put under a relatively higher stress or is relatively more susceptible to stress concentrations and/or fatigue, a lattice structure type that is stronger and/or a lattice structure having a higher density may be used. As will be appreciated by the skilled person, such areas may be identified by modelling the housing 40 under operating conditions. Such modelling may involve computational fluid dynamics (CFD) and/or finite element analysis (FEA). Thus, in some embodiments, the lattice structure 44 has one density in one location within the housing 40 and a different density in another location within the housing 40. In additional or alternative embodiments, the lattice structure 44 can be one type of lattice structure 44 in one location within the housing 40 and may be a different type of lattice structure 44 in another location within the housing 40.

In the depicted embodiments, the outer shell 42 is a solid outer shell layer, or in other words, a "fully-dense" structure that is non-porous, unlike the lattice structure 44. In this manner, outer shell 42 forms an external layer of "fully-dense" material that surrounds the lattice structure 44. The thickness of the outer shell 42 is defined as the distance between the outer and inner wall surfaces 42a, 42b. The thickness of outer shell 42 may be constant around the perimeter of the housing 40 or may be varied around the perimeter of the housing 40. For instance, the thickness of outer shell 42 may be varied to account for increased stress and fatigue resistance requirements, as discussed above with regard to the lattice structure 44.

The housing 40 may be formed using additive manufacturing. A particularly suitable additive manufacturing technique may be wire feed additive manufacturing, and specifically, wire feed metal deposition. In this process, wire stock of metal is progressively fed through a wire feeder and deposited onto a substrate using a melting device, for example, an electron beam or laser. This allows layers of the housing 40 to be formed on a substrate, until the whole housing 40 has been formed. Such wire feed deposition techniques are well-known in the field of 3D printing, for instance, and need not, therefore, be described in detail here.

The housing 40 can be made of any suitable material that is available as a wire stock for wire feed additive manufacturing, and will be determined by the intended operating environment and conditions of the eventual check valve. For instance, check valve housing 40 may comprise an aluminium, steel, titanium or nickel-based alloy. In some embodiments, different alloys may be used in different areas of the check valve housing 40, according to differing mechanical property requirements.

By using wire feed additive manufacturing it is possible to form the aforementioned outer shell 42 and lattice structure 44, with cavities also defined in the housing 40. Other additive manufacturing techniques, such as powder-based deposition techniques, may not be capable of forming such structures, since powder may become trapped within the housing lattice structure 44, and cannot be removed therefrom. In addition, powder-based deposition techniques may not provide the deposition precision and structural support necessary to achieve an intricate lattice structure 44, such as illustrated. As will be appreciated by the skilled person, traditional casting techniques also fail to provide the precision and structural support necessary to produce a housing 40 with an outer shell 42 and lattice structure 44, such as illustrated. In addition, the casting structure needed to produce such a lattice structure 44 would be prohibitively complex and expensive.

The use of wire feed additive manufacturing allows relatively quick and inexpensive manufacture of the housing 40 compared to prior art techniques. In addition, the formation of the outer shell 42 and lattice structure 44 permits substantial weight savings compared to prior art check valve housings (for example, if the volume enclosed by the outer shell 42 were a solid, "fully-dense" structure that is non-porous and/or the volume enclosed by the outer shell 42 were filled with the material that defines the outer shell 42), which can be beneficial for certain check valve applications, particularly those used in aerospace applications. Moreover, existing check valve housing geometries can be produced, meaning that the disclosed lighter weight check valve housing can be used as a direct replacement for an existing check valve housing, without the whole check valve requiring a redesign.

## Claims

1. A check valve housing (40) comprising:
an outer shell (42) having an outer wall surface (42a) defining an outer perimeter of the housing (40); and
a lattice structure (44) within the outer shell (42).

2. The check valve housing of claim 1, wherein the housing (40) is a generally planar, annular element, with an outer perimeter of the housing (40) defining an annular body (50), a web (54) extending across the diameter of the annular body (50), and a pair of D-shaped openings (60) formed between the annular body (50) and the web (54).

3. The check valve housing of claim 1 or 2, wherein the outer shell (42) includes an inner wall surface (42b), defining an inner perimeter of the outer shell (42), and the lattice structure (44) extends between different portions of the inner wall surface (42b).

4. The check valve housing of claim 1, 2 or 3, wherein at least one mounting opening (52a, 52b) for receiving attachment fasteners is defined through the housing (40) by the outer wall surface (42a) of the outer shell (42).

5. A method of manufacturing a check valve housing (40) using additive manufacturing, wherein the additive manufacturing comprises wire-feed metal deposition.

6. The method of claim 5, wherein the method further comprises:
depositing successive layers of material one on top of each other to provide an outer shell (42) and a lattice structure (44) within the outer shell (42).

7. The method of claim 6, wherein the outer shell (42) includes an inner wall surface (2b), defining an inner perimeter of the outer shell (42), and the method further comprises:
depositing the lattice structure (44) to extend between different portions of the inner wall surface (42b).

8. The method of claim 7, wherein the outer shell (42) has an outer wall surface (42a) defining an outer perimeter of the housing (40), and the method further comprises:
depositing successive layers such that the outer perimeter of the housing (40) defines an annular body (50), a web (54) extending across the diameter of the annular body (50), and a pair of D-shaped openings (60) formed between the annular body (50) and the web (54), and, optionally, at least one mounting opening (52a, 52b) defined through the housing (40).

9. The check valve housing or method of any of claims 1 to 4 and 6 to 8, wherein the outer shell (42) is a solid outer shell layer.

10. The check valve housing or method of any of claims 1 to 4 and 6 to 9, wherein the lattice structure (44) has an irregular structure, defining a mixed density within the outer shell (42).

11. The check valve housing or method of claim 10, wherein the density of the lattice structure (44) is greater in an area of the housing (40) determined to experience a relatively higher stress during operation, than in another area of the housing (40).

12. The check valve housing or method of claim 10 or 11, wherein the density of the lattice structure (44) is greater in an area of the housing (40) determined to be relatively more susceptible to stress concentrations and/or fatigue than in another area of the housing (40).

13. The check valve housing or method of any of claims 1 to 4 and 6 to 12, wherein the lattice structure (44) has an irregular structure, comprising more than one different types of lattice structure (44) within the outer shell (42).

14. The check valve housing or method of any of claims 1 to 4 and 6 to 9, wherein the lattice structure (44) has a regular structure, defining an approximately uniform density within the outer shell (42) and one type of lattice structure (44).

15. The check valve housing or method of any of claims 1 to 4 and 6 to 14, wherein the thickness of the outer shell (42) varies around the perimeter of the housing (40).
